(19)

Europäisches
Patentamt
European
Patent Office
Office européen
des brevets

(11) **EP 4 755 925 A1**

(12) **EUROPEAN PATENT APPLICATION**
published in accordance with Art. 153(4) EPC

(43) Date of publication:
**10.06.2026 Bulletin 2026/24**

(21) Application number: **24851580.1**

(22) Date of filing: **22.07.2024**

(51) International Patent Classification (IPC):
**C08C 19/08** (2006.01)          **C08J 11/10** (2006.01)

(52) Cooperative Patent Classification (CPC):
**C08C 19/085; C08J 11/10;** Y02W 30/62

(86) International application number:
**PCT/JP2024/026168**

(87) International publication number:
**WO 2025/033151 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.08.2023 JP 2023128047**

(71) Applicants:
• **BRIDGESTONE CORPORATION**
**Chuo-ku**
**Tokyo 104-8340 (JP)**
• **National Institute of Advanced Industrial**
**Science and Technology**
**Chiyoda-ku**
**Tokyo 100-8921 (JP)**

(72) Inventors:
• **FUKAYA, Norihisa**
**Tsukuba-shi, Ibaraki 305-8561 (JP)**
• **YAMASHITA, Hiroshi**
**Tsukuba-shi, Ibaraki 305-8561 (JP)**

• **HATORI, Makiko**
**Tsukuba-shi, Ibaraki 305-8561 (JP)**
• **SUGIKI, Makoto**
**Tsukuba-shi, Ibaraki 305-8561 (JP)**
• **WAHYU, Satpriyo Putro**
**Tsukuba-shi, Ibaraki 305-8561 (JP)**
• **CHOI, Jun-Chul**
**Tsukuba-shi, Ibaraki 305-8561 (JP)**
• **MATSUMOTO, Kazuhiro**
**Tsukuba-shi, Ibaraki 305-8561 (JP)**
• **NASHI, Takayuki**
**Tokyo 104-8340 (JP)**
• **HOMMA, Masahiro**
**Tokyo 104-8340 (JP)**
• **TAHARA, Seiichi**
**Tokyo 104-8340 (JP)**
• **HOJO, Masahiro**
**Tokyo 104-8340 (JP)**

(74) Representative: **Marks & Clerk LLP**
**15 Fetter Lane**
**London EC4A 1BW (GB)**

(54) **METHOD FOR DECOMPOSING VULCANIZED RUBBER**

(57)    With the aim of providing an efficient decomposition method for vulcanized rubber, a decomposition method for vulcanized rubber includes causing a radical initiator selected from peroxides to act on vulcanized rubber or a composition containing the vulcanized rubber at 0°C to 60°C in a solvent, under an atmosphere containing oxygen gas, to thereby cause conversion into a soluble decomposition product.

EP 4 755 925 A1

**Description**

TECHNICAL FIELD

The present disclosure relates to a decomposition method for vulcanized rubber.

BACKGROUND

Regarding the recycling of vulcanized rubber products such as tire rubber, conventionally, they are often reused as fuel in cement plants and the like, which contributes to an increase in carbon dioxide emissions. However, since carbon dioxide emissions promote global warming, from the viewpoint of suppressing global warming by reducing carbon dioxide emissions, the development of new reuse technologies for vulcanized rubber products is required.

Vulcanized rubber basically has a structure crosslinked by sulfur and is generally insoluble and has poor processability. Therefore, in order to efficiently reuse vulcanized rubber, it is important to develop a technology for decomposing insoluble and poorly processable vulcanized rubber into soluble polymers or the like, which have high solubility in solvents and are easy to handle and process, by reactions such as desulfurization (hereinafter, decrosslinking may sometimes be referred to as "desulfurization").

As decomposition methods for vulcanized rubber by desulfurization, the following are known: (A) a method of heating to a high temperature (generally 180°C or higher) (PTL 1), (B) a method of adding a thiol compound (PTL 2), (C) a method of adding an alkali metal (PTL 3), (D) a method of adding microorganisms (PTL 4), (E) a method of swelling vulcanized rubber in a solvent and then adding a peroxide (PTL 5), or a method of adding a peroxide to vulcanized rubber in a solvent and heating to 80°C or higher (NPL 1, 2).

CITATION LIST

(Patent Literature)

PTL 1: JP H11-209511 A
PTL 2: JP S54-117594 A
PTL 3: JP H11-514020 A
PTL 4: JP 2004-313031 A
PTL 5: JP 2002-97386 A

(Non-patent Literature)

NPL 1: J. Polym. Environ., 2011, 19, 382-390
NPL 2: Polym. Degrad. Stab., 2015, 118, 88-95

SUMMARY

(Technical Problem)

However, the above methods (A) to (E) have the following problems. For example, in method (A), the method of heating vulcanized rubber to a high temperature, there is a problem in that side reactions are likely to occur and the basic skeleton of the vulcanized rubber is difficult to retain. In method (B), the method of adding a sulfur compound, there is a problem in that the sulfur content increases, thereby limiting the applications of the resulting product. In method (C), the method of adding an alkali metal, there is a problem in that the alkali metal is highly reactive with moisture and the like, resulting in high risk. In method (D), the method using microorganisms, there is a problem in that the reaction rate is slow and production efficiency is low. Furthermore, in method (E), the method using a peroxide, since the basic condition is that the ratio of total solids other than the solvent after decomposition (mg) to the solvent (mL) is 1:30 or less, a large amount of solvent is required, and even in the method of heating to 80°C or higher, the yield of the desulfurized product is not sufficiently high.

Therefore, the present disclosure addresses the problem of providing a decomposition method for vulcanized rubber that can efficiently promote desulfurization and solve the above problems of the prior art.

(Solution to Problem)

As a result of intensive research to solve the above problems, the inventors of the present disclosure have discovered the novel fact that, under an atmosphere containing oxygen gas, a decomposition reaction of vulcanized rubber using a radical initiator selected from peroxides proceeds easily at a relatively low temperature (60°C or lower) without swelling the vulcanized rubber or using a large amount of solvent, thereby completing the present disclosure.

The gist of the present disclosure is as follows.

<1> A decomposition method for vulcanized rubber comprising causing a radical initiator selected from peroxides to act on vulcanized rubber or a composition containing the vulcanized rubber at 0°C to 60°C in a solvent, under an atmosphere containing oxygen gas, to thereby cause conversion into a soluble decomposition product.

<2> The decomposition method according to <1>, wherein a rubber component of the vulcanized rubber is a rubber component including at least one selected from natural rubber (NR), synthetic isoprene rubber (IR), butadiene rubber (BR), and styrene-butadiene rubber (SBR).

<3> The decomposition method according to <1> or <2>, wherein the composition containing the vulcanized rubber is a composition selected from tire rubbers containing carbon black or silica.

<4> The decomposition method according to any one of <1> to <3>, wherein the peroxide is a peroxide selected from acyl peroxides.

<5> The decomposition method according to <4>, wherein the acyl peroxide is an acyl peroxide selected from benzoyl peroxide, lauroyl peroxide, and acetyl peroxide.

<6> The decomposition method according to any one of <1> to <5>, wherein the decomposition method uses a chlorinated hydrocarbon or an aromatic hydrocarbon as the solvent.

<7> The decomposition method according to <6>, wherein the chlorinated hydrocarbon is a chlorinated hydrocarbon selected from chloroform and chlorobenzene.

<8> The decomposition method according to <6>, wherein the aromatic hydrocarbon is ethylbenzene.

<9> The decomposition method according to any one of <1> to <8>, wherein the vulcanized rubber is vulcanized rubber that has undergone a pretreatment step of washing with a solvent.

In a preferred example of the decomposition method for vulcanized rubber of the present disclosure, usually, 50 mass% or more of the rubber component in the vulcanized rubber is converted into a soluble decomposition product. The soluble decomposition product specifically refers to a soluble polymer derived from the rubber component in the vulcanized rubber and a composition containing the same (hereinafter, sometimes referred to as a soluble polymer composition), and "soluble" means that it can be dissolved in the solvent used. When the weight-average molecular weight of the soluble polymer is 200 to 200,000, the yield of reusable soluble polymer is improved, and the economic and environmental value of this decomposition method is further enhanced.

In another preferred example of the decomposition method for vulcanized rubber of the present disclosure, the vulcanized rubber contains at least one selected from the group consisting of isoprene skeleton rubber, styrene-butadiene rubber, and butadiene rubber. In this case, by the decomposition method, a soluble polymer containing a diene-based monomer such as isoprene or butadiene, which is easy to reuse, in its skeleton can be obtained.

In another preferred example of the decomposition method for vulcanized rubber of the present disclosure, the vulcanized rubber further contains carbon black. Even in this case, the vulcanized rubber can be efficiently decomposed, and the carbon black can also be reused. In a preferred example of the decomposition method for compounded rubber containing carbon black, the ratio of total solids (recovered carbon black component) (mg) to solvent (mL) after decomposition of the compounded rubber is usually 1:25 or more, and since the amount of solvent used can be kept low, it is advantageous economically and environmentally.

(Advantageous Effect)

According to the present disclosure, since the reaction can be carried out under mild conditions to convert vulcanized rubber into a soluble decomposition product, an efficient decomposition method for vulcanized rubber can be provided.

DETAILED DESCRIPTION

Hereinafter, the decomposition method for vulcanized rubber according to the present disclosure will be illustrated and described in detail based on its embodiments.

The decomposition method for vulcanized rubber of the present disclosure is characterized in that a radical initiator selected from peroxides is caused to act, in a solvent, at 0°C to 60°C, under an atmosphere containing oxygen gas, on vulcanized rubber or a composition containing the same, to convert it into a soluble decomposition product.

The peroxide used in the decomposition method for vulcanized rubber of the present disclosure is basically considered to act on the crosslinked sites formed by sulfur and to cleave the crosslinking bonds. Therefore, in the case of diene rubber, it is considered that the main chain skeleton is basically maintained even after the decomposition reaction.

<Radical Initiator>

The radical initiator used in the present disclosure is selected from peroxides.

Examples of peroxides include acyl peroxides, percarboxylic acids, dialkyl peroxides, and alkyl hydroperoxides. Among these, from the viewpoint of reaction rate, acyl peroxides and percarboxylic acids are preferably used, and acyl peroxides are more preferably used.

Specific examples thereof include, as acyl peroxides, benzoyl peroxide, toluoyl peroxide, chlorobenzoyl peroxide, dichlorobenzoyl peroxide, methoxybenzoyl peroxide, phthaloyl peroxide, acetyl peroxide, propanoyl peroxide, caprylyl peroxide, decanoyl peroxide, lauroyl peroxide, myristoyl peroxide, stearoyl peroxide, and the like. Among acyl peroxides, from the viewpoints of reaction rate and ease of availability, benzoyl peroxide, lauroyl peroxide, and acetyl peroxide are preferably used. From the viewpoints of reaction rate and stability of the peroxide, lauroyl peroxide is preferred over benzoyl peroxide.

Further, examples of percarboxylic acids include perbenzoic acid, chloroperbenzoic acid, peracetic acid, perpropionic acid, and the like. Furthermore, examples of dialkyl peroxides include di-tert-butyl peroxide, dicumyl peroxide, tert-butyl cumyl peroxide, and the like, and examples of alkyl hydroperoxides include tert-butyl hydroperoxide, cumene hydroperoxide, and the like.

These peroxides may be in the form of hydrates from the viewpoints of safety and ease of availability. By using a suitable initiator, vulcanized rubber can be efficiently decomposed under mild conditions.

<Decomposition Step>

In the decomposition method for vulcanized rubber of the present embodiment, vulcanized rubber or a composition containing the same is decomposed using a radical initiator selected from the aforementioned peroxides.

(Vulcanized Rubber)

The vulcanized rubber to be decomposed in the decomposition method of the present embodiment contains, for example, diene rubber having crosslinked sites containing sulfur atoms, and may further contain carbon black, silica, and the like.

The form of the vulcanized rubber is not particularly limited, and may be, for example, crumb rubber, powdered rubber, or the like. Such crumb rubber or powdered rubber can be obtained by cutting and pulverizing used rubber products such as waste tires. The pulverization step may include multiple steps such as a preliminary pulverization step and a fine pulverization step, and after the pulverization step, a classification step may be performed to adjust the particle size of the crumb rubber to be used.

Further, as the composition containing the vulcanized rubber, waste rubber subjected to recycling, used rubber products, and the like may be used. Waste rubber is not limited to that generated from rubber products, but refers to all discarded rubber including unnecessary scraps generated during the production or repair of rubber products. Examples of scraps include buffing dust, peeling rubber, and the like. Buffing dust is, for example, fine rubber generated in the buffing step of retreading tires, in which the tread portion remaining on the base tire is shaved off. Peeling rubber is, for example, long rubber strips of about 1 to 2 cm in width, stripped from the surface of rubber products such as tires. Peeling rubber is generated by shaving the surface of rubber products such as tires using a knife with a U-shaped or V-shaped tip as a peeler. Rubber products include, for example, final products such as tires, rubber hoses, rubber conveyor belts, and rubber parts or components in the manufacturing stage of final products. Used tires may be those subjected to retreading, or may be waste tires generated due to tire replacement, scrapping of vehicles, or ELT (End-of-Life Tire) that have reached the end of their service life as tires, or those discarded for any reason. As the composition containing the vulcanized rubber, tire rubber containing carbon black or silica is preferred.

--Diene Rubber--

The diene rubber is rubber containing units (diene units) derived from diene monomers, and may further contain units derived from copolymerizable comonomers.

The units derived from diene monomers enable crosslinking (vulcanization) of the diene rubber and impart stretchability and strength characteristic of rubber. In the crosslinked rubber, the diene rubber is usually present in a crosslinked state, but a part thereof may be uncrosslinked. Specific examples of diene monomers (diene compounds) include 1,3-butadiene, isoprene, 1,3-pentadiene, 2,3-dimethyl-1,3-butadiene, and the like.

On the other hand, examples of copolymerizable comonomers include aromatic vinyl compounds. Specific examples of such aromatic vinyl compounds include styrene, o-methylstyrene, m-methylstyrene, p-methylstyrene, o,p-dimethylstyrene, o-ethylstyrene, m-ethylstyrene, p-ethylstyrene, and the like.

Examples of the diene rubber include isoprene skeleton rubber, styrene-butadiene rubber (SBR), butadiene rubber (BR), chloroprene rubber (CR), and the like. Here, isoprene skeleton rubber is rubber having isoprene units as the main skeleton, and specific examples include natural rubber (NR), synthetic isoprene rubber (IR), and the like. Among these, it is preferable that the diene rubber contains at least one selected from the group consisting of isoprene skeleton rubber, styrene-butadiene rubber, and butadiene rubber. When the diene rubber contains at least one selected from the group consisting of isoprene skeleton rubber, styrene-butadiene rubber, and butadiene rubber, a diene-based soluble polymer containing a skeleton such as isoprene or butadiene, which is easy to reuse, can be obtained.

The content of the diene rubber in the vulcanized rubber is not particularly limited, and is preferably in the range of 10 to 100 mass%, and more preferably in the range of 30 to 100 mass% from the viewpoint of further improving the yield of the soluble polymer.

--Sulfur--

The vulcanized rubber basically contains sulfur. In the vulcanized rubber, sulfur is usually present as a bridge bond crosslinking the diene rubber, but some thereof may be free.

The decomposition method for vulcanized rubber of the present disclosure mainly decomposes the crosslinking bonds by the action of the radical initiator, thereby decomposing the vulcanized rubber to provide a soluble polymer. At that time, sulfur is basically considered to remain in the soluble polymer, but even if there is a sulfur component that is liberated into the solution, the sulfur component can be separated by purification operations such as reprecipitation, and the soluble polymer can be purified.

The sulfur content in the vulcanized rubber is not particularly limited, and is, for example, in the range of 0.1 to 10 parts by mass per 100 parts by mass of the diene rubber, and preferably in the range of 1 to 5 parts by mass.

--Carbon Black--

The vulcanized rubber may further contain carbon black. In the decomposition method for vulcanized rubber of the present disclosure, the vulcanized rubber is decomposed into a soluble polymer in the decomposition step. Therefore, even if the vulcanized rubber contains carbon black, the carbon black can be easily separated and recovered after the decomposition step, for example, by solid-liquid separation. Accordingly, even when the vulcanized rubber contains carbon black, the vulcanized rubber can be efficiently decomposed.

The content of carbon black in the crosslinked rubber is not particularly limited, and is, for example, in the range of 10 to 150 parts by mass per 100 parts by mass of the diene rubber, and preferably in the range of 30 to 120 parts by mass.

--Other Components--

The vulcanized rubber may further contain, in addition to the above diene rubber, carbon black, and sulfur, various components commonly used in the rubber industry, such as rubber components other than diene rubber, fillers other than carbon black (such as silica, calcium carbonate), silane coupling agents, antioxidants, softeners, processing aids, resins, surfactants, organic acids (such as stearic acid), zinc oxide (zinc white), vulcanization accelerators, crosslinking agents other than sulfur, and the like.

(Amount of Radical Initiator)

The amount of the radical initiator used is preferably 0.1 part by mass or more, more preferably 1 part by mass or more, and preferably 30 parts by mass or less, more preferably 20 parts by mass or less, per 100 parts by mass of the vulcanized rubber. If the amount of the catalyst is 0.1 part by mass or more per 100 parts by mass of the compounded rubber, the decomposition reaction of the vulcanized rubber proceeds further, and if the amount of the catalyst is 30 parts by mass or less per 100 parts by mass of the vulcanized rubber, it is preferable from the viewpoint of cost.

(Reaction Conditions)

The decomposition step is carried out in a solvent at 0°C or higher and 60°C or lower under an atmosphere containing oxygen gas.

The concentration (vol%) of oxygen gas in the reaction atmosphere is usually 1 to 100%, preferably 1 to 80%, and more preferably 5 to 50%, including about 20%, which is the oxygen concentration in air. If the concentration of oxygen gas is not 100%, an inert gas such as nitrogen gas can be used as the remaining gas component. In general, the higher the oxygen concentration, the more advantageous the decomposition reaction, but undesirable side reactions are also more likely to occur, so when the oxygen concentration is high, it is necessary to appropriately control the reaction time, reaction temperature, and the like.

On the other hand, when air with an oxygen concentration of about 20% is used, it is not necessary to separately prepare oxygen gas, which is advantageous in terms of equipment and economy. In reactions under an air atmosphere, if the amount of vulcanized rubber is small, the reaction proceeds even in a closed system container with a sufficiently large internal volume. In such a case, the internal volume of the reaction vessel is generally 50 parts by volume or more, and more preferably 100 parts by volume or more, per 1 part by volume of vulcanized rubber.

When the decomposition reaction is carried out in a closed system, if the amount of vulcanized rubber increases, a reaction vessel with a large internal volume is required, which is not preferable from the viewpoint of equipment. Therefore, from the viewpoint of equipment, it is preferable to carry out the reaction in an open system in which air or the like can circulate. To make the reaction system open, methods such as opening a part of the reaction vessel, installing a membrane that allows circulation of air or the like, or overflowing air or the like can be considered. In addition, a method in which air or the like is continuously or intermittently blown into the solution during the reaction is also an advantageous form. The blowing rate in such a case is not particularly limited, but is usually 1 to 1000 mL/min, preferably 2 to 500 mL/min, and more preferably 3 to 200 mL/min per 1 g of vulcanized rubber.

In the decomposition of vulcanized rubber of the present embodiment, a solvent is used. Any solvent that does not inhibit the decomposition reaction can be used, and examples include aromatic hydrocarbons (aromatic solvents), chlorinated hydrocarbons, aliphatic hydrocarbons, alicyclic hydrocarbons, ethers, nitriles, and the like.

Specific examples thereof include, as aromatic hydrocarbons, toluene, xylene, ethylbenzene, trimethylbenzene, propylbenzene, and the like; as chlorinated hydrocarbons, chloroform, dichloromethane, dichloroethane, trichloroethane, tetrachloroethane, tetrachloroethylene, chlorobenzene, dichlorobenzene, and the like; as aliphatic hydrocarbons, pentane, hexane, octane, and the like; as alicyclic hydrocarbons, cyclohexane, cyclooctane, and the like; and as ethers, tetrahydrofuran, methyl tetrahydrofuran, tetrahydropyran, dioxane, benzonitrile, and the like.

Among these, from the viewpoints of reaction rate and ease of availability, aromatic hydrocarbons and chlorinated hydrocarbons are preferred. Specific examples thereof include toluene, xylene, ethylbenzene, chloroform, chlorobenzene, dichlorobenzene, and the like. Among aromatic hydrocarbons, from the viewpoint of reaction rate, ethylbenzene is preferred over toluene.

The solvent suitable for the decomposition reaction also depends on the type of vulcanized rubber. For example, in the case of NR-based, IR-based, or BR-based vulcanized rubber, aromatic hydrocarbons and chlorinated hydrocarbons are preferred from the viewpoints of reaction rate and solubility of the product, and specific examples thereof include toluene, ethylbenzene, chloroform, chlorobenzene, and the like. On the other hand, in SBR-based vulcanized rubber, chlorinated hydrocarbons are more preferred from the viewpoint of reaction rate, and specific examples thereof include chloroform, chlorobenzene, and the like.

By using a preferred solvent, the decomposition of vulcanized rubber proceeds more easily, and a soluble polymer can be produced more efficiently.

The amount of the solvent used is preferably 2 mL or more, more preferably 10 mL or more, and preferably 100 mL or less, more preferably 50 mL or less, per 1 g of vulcanized rubber. If the amount of the solvent is 2 mL or more per 1 g of vulcanized rubber, the decomposition reaction of the vulcanized rubber is promoted, and if the amount of the solvent is 50 mL or less per 1 g of crosslinked rubber, it is preferable from the viewpoint of cost.

The decomposition method for vulcanized rubber of the present embodiment is carried out at 0°C to 60°C. By carrying out the decomposition step at 0°C to 60°C, the decomposition reaction of the diene rubber in the vulcanized rubber can be efficiently performed. From the viewpoint of decomposition rate, the decomposition step is preferably at 5°C or higher, more preferably at 10°C or higher, and from the viewpoints of energy cost, environmental load, and reaction apparatus, preferably at 50°C or lower, more preferably at 40°C or lower.

The decomposition reaction of the present disclosure basically proceeds smoothly at around room temperature (20°C to 30°C), so no special equipment for heating or cooling is required, which is also an advantage of the decomposition method of the present disclosure.

The decomposition step can be carried out at any pressure, including reduced pressure, atmospheric pressure, or increased pressure. As an example, the reaction pressure is preferably 1 kPa to 10 MPa, more preferably 10 kPa to 1 MPa, and even more preferably 50 kPa to 500 kPa.

In the decomposition reaction of the present disclosure, it is important to efficiently stir the raw material vulcanized rubber, radical initiator, and solvent. As stirring methods, various conventional methods can be used, such as using a magnetic stirrer, a mechanical stirrer, or a shaker.

In addition, to promote the reaction, ultrasonic irradiation, microwave irradiation, light irradiation, and the like may also be used. These may also be used in combination.

(Decomposition Product)

In the decomposition method for vulcanized rubber of the present embodiment, it is preferable that, after the decomposition step, 50 mass% or more of the rubber component in the vulcanized rubber is decomposed into a soluble polymer having a weight-average molecular weight of 200 to 200,000, and more preferably into a soluble polymer having a weight-average molecular weight of 300 to 150,000.

The weight-average molecular weight (Mw) can be measured by gel permeation chromatography (hereinafter, sometimes referred to as GPC).

In addition, after the decomposition step, insoluble carbon black is recovered. The recovered carbon black usually contains organic matter derived from the vulcanized rubber. The proportion of organic matter in the recovered carbon black is preferably 5 to 35 mass%, and more preferably 7 to 25 mass%.

<Others>

The decomposition method for vulcanized rubber of the present embodiment may further include other steps. Examples of such steps include a pretreatment step for the vulcanized rubber (for example, cutting step, pulverization step), and the like.

As a pretreatment step for vulcanized rubber, a step of washing with a solvent may be included. By washing with a solvent, additives such as antioxidants remaining in the vulcanized rubber, which are considered to inhibit the decomposition reaction, can be removed, thereby reducing the amount of initiator used. The type of solvent used in the pretreatment step is not particularly limited, but a solvent that easily dissolves additives such as antioxidants is preferred, and specific examples include hydrocarbons such as toluene, ketones such as acetone, chlorinated hydrocarbons such as chloroform, ethers such as tetrahydrofuran, and the like.

Further, the decomposition method for vulcanized rubber of the present embodiment can be carried out in any type of reactor, such as batch type or flow type.

<Separation and Purification of Product>

The polymer product after the decomposition reaction can be recovered and purified by methods such as separating the insoluble component mainly composed of carbon black by centrifugation or filtration, then precipitating with a poor solvent, or removing impurities by column chromatography or preparative GPC. The obtained polymer product and the recovered carbon black as the insoluble component can be reused as raw materials for compounded rubber and the like.

In a preferred example of decomposition of compounded rubber containing carbon black, the ratio of the recovered carbon black component (mg) after the decomposition reaction to the solvent (mL) is generally 1:25 or more, and preferably 1:20 or more.

EXAMPLES

Hereinafter, the present disclosure will be described in further detail with reference to examples, but the present disclosure is not limited in any way to the following examples.

<Analytical Instruments, etc.>

- Gel permeation chromatography (hereinafter, sometimes referred to as GPC): Analytical system LabSolutions manufactured by Shimadzu Corporation (solvent delivery unit: LC-20AB manufactured by Shimadzu Corporation, column: TSKgel SuperHM-H $\times$ 2 columns manufactured by Tosoh Corporation, detector: differential refractometer RID-10A manufactured by Shimadzu Corporation, eluent: tetrahydrofuran, flow rate: 0.6 mL/min, measurement temperature: 40°C, weight-average molecular weight (Mw) and number-average molecular weight (Mn) are based on standard polystyrene).
- Nuclear magnetic resonance analyzer (hereinafter, sometimes referred to as NMR): AVANCE III HD 600 manufactured by Bruker Corporation (solvent: $CDCl_3$).

<Preparation of Vulcanized Rubber Samples>

(Vulcanized Rubber A)

A rubber composition was prepared by compounding, per 100 parts by mass of natural rubber, 50 parts by mass of carbon black, 2 parts by mass of stearic acid, 2.25 parts by mass of zinc oxide, 2 parts by mass of antioxidant 6PPD [N-phenyl-N'-(1,3-dimethylbutyl)-p-phenylenediamine], 0.6 parts by mass of vulcanization accelerator CBS [N-cyclohexyl-2-benzothiazolylsulfenamide], 1.8 parts by mass of sulfur, and 1 part by mass of antioxidant TMDQ [trimethyldihydroquinoline polymer], and the rubber composition was subjected to heat crosslinking to prepare vulcanized rubber.

(Vulcanized Rubber B)

A rubber composition was prepared by compounding, per 60 parts by mass of natural rubber and 40 parts by mass of butadiene rubber, 50 parts by mass of carbon black, 2 parts by mass of stearic acid, 2.25 parts by mass of zinc oxide, 2 parts by mass of antioxidant 6PPD [N-phenyl-N'-(1,3-dimethylbutyl)-p-phenylenediamine], 0.6 parts by mass of vulcanization accelerator CBS [N-cyclohexyl-2-benzothiazolylsulfenamide], 1.8 parts by mass of sulfur, and 1 part by mass of antioxidant TMDQ [trimethyldihydroquinoline polymer], and the rubber composition was subjected to heat crosslinking to prepare vulcanized rubber.

(Vulcanized Rubber C)

A rubber composition was prepared by compounding, per 40 parts by mass of natural rubber and 60 parts by mass of butadiene rubber, 50 parts by mass of carbon black, 2 parts by mass of stearic acid, 2.25 parts by mass of zinc oxide, 2 parts by mass of antioxidant 6PPD [N-phenyl-N'-(1,3-dimethylbutyl)-p-phenylenediamine], 0.6 parts by mass of vulcanization accelerator CBS [N-cyclohexyl-2-benzothiazolylsulfenamide], 1.8 parts by mass of sulfur, and 1 part by mass of antioxidant TMDQ [trimethyldihydroquinoline polymer], and the rubber composition was subjected to heat crosslinking to prepare vulcanized rubber.

(Vulcanized Rubber D)

A rubber composition was prepared by compounding, per 100 parts by mass of styrene-butadiene rubber, 50 parts by mass of carbon black, 2 parts by mass of stearic acid, 2.25 parts by mass of zinc oxide, 1 part by mass of wax, 1 part by mass of antioxidant 6PPD [N-phenyl-N'-(1,3-dimethylbutyl)-p-phenylenediamine], 0.3 parts by mass of vulcanization accelerator DPG [1,3-diphenyl guanidine], 0.5 parts by mass of vulcanization accelerator MBTS [dibenzothiazolyl disulfide], 0.5 parts by mass of vulcanization accelerator TBBS [N-t-butyl-2-benzothiazolesulfenamide], 1.5 parts by mass of sulfur, and 1 part by mass of antioxidant TMDQ [trimethyldihydroquinoline polymer], and the rubber composition was subjected to heat crosslinking to prepare vulcanized rubber.

In the first decomposition step of the vulcanized rubber, the obtained vulcanized rubber was used in a cut form (about 5 mm square), or further cryogenically ground (about 1-2 mm square).

<Examples of First Decomposition Step>

(Calculation of Yield)

The yield of the first decomposition step was calculated as follows: after adding a fixed amount of internal standard substance (hexamethyldisilane) to the reaction solution, a portion of the reaction solution was taken, $^1$H NMR measurement was performed, the weight of the monomer skeleton of the solubilized rubber component was calculated, and the ratio to the weight of the monomer skeleton in the vulcanized rubber before reaction (calculated from the compounding ratio of the vulcanized rubber) was determined according to the following equation.

Yield of the first decomposition step (%) = (weight of the monomer skeleton of the solubilized rubber component after reaction ÷ weight of the monomer skeleton of the vulcanized rubber component before reaction) × 100

For example, in the case of natural rubber, in $^1$H NMR (CDCl$_3$ solvent), the proton signal of the internal standard substance (hexamethyldisilane) and the proton signal of the isoprene skeleton (alkenyl group) of the solubilized rubber component are observed at around 0.04 and 5.13 ppm, respectively. The yield can be calculated from the ratio of the signal integration value of the isoprene skeleton to the signal integration value of the internal standard substance. The polyisoprene content in natural rubber was set at 93%.

Hereinafter, specific examples will be described.

(Example 1)

A mixture of 50 mg of the above vulcanized rubber sample A, 7.4 mg of benzoyl peroxide (hydrated, 75% purity), and 0.8 mL of toluene was placed in a 5 mL Spitz-type vial (sealed), stirred with a magnetic stirrer using a Teflon® (Teflon is a registered trademark in Japan, other countries, or both) rotor under an air atmosphere at 25°C (room temperature) for 1 day, and subjected to a decomposition reaction. As a result of calculating the yield of the soluble polymer produced by the decomposition of the vulcanized rubber by $^1$H NMR measurement of the reaction solution, the yield was calculated to be 89%. Further, by GPC measurement of the reaction solution, the molecular weight was estimated to be Mw = 41400, Mn = 16900, Mw/Mn = 2.4 (see Table 1).

(Examples 2-48)

The results of decomposition reactions and product analyses conducted in the same manner as in Example 1, except that the reaction conditions (type of vulcanized rubber, type of radical initiator, type of solvent, reaction temperature, type of vessel, etc.) were changed, are presented in Table 1 and Table 2.

[Table 1]

| Example[1] | Vulcanized rubber [mg] | Radical initiator[2] [mg] | Solvent[3] [mL] | Temperature[4] (°C) | Time[5] | Yield[6] (%) | Molecular weight | | |
|---|---|---|---|---|---|---|---|---|---|
| | | | | | | | Mw | Mn | Mw/Mn |
| Example 1 | A [50] | BPO [7.4] | PhMe [0.8] | 25 | 1d | 89 | 41400 | 16900 | 2.4 |
| Example 2 | A [50] | BPO [7.4] | Xy [0.8] | 25 | 1d | 86 | 37300 | 15800 | 2.4 |
| Example 3 | A [50] | BPO [7.4] | CyH [0.8] | 25 | 1d | 75 | 41700 | 18100 | 2.3 |
| Example 4 | A [50] | BPO [7.4] | $CHCl_3$ [0.8] | 25 | 1d | 86 | 40000 | 15600 | 2.6 |
| Example 5 | A [50] | BPO [7.4] | $CHCl_2CH_2Cl$ [0.8] | 25 | 1d | 88 | 41900 | 16200 | 2.6 |
| Example 6 | A [50] | BPO [7.4] | $Cl_2C=CCl_2$ [0.8] | 25 | 1d | 86 | 47600 | 19100 | 2.5 |
| Example 7 | A [50] | BPO [7.4] | DCB [0.8] | 25 | 1d | 88 | 46500 | 17700 | 2.6 |
| Example 8 | A [50] | BPO [7.4] | PhC1 [0.8] | 25 | 1d | 84 | 39800 | 15900 | 2.5 |
| Example 9 | A [50] | BPO [7.4] | PhCN [0.8] | 25 | 1d | 87 | 31100 | 12500 | 2.5 |
| Example 10 | A [50] | BPO [7.4] | PhOMe [0.8] | 25 | 1d | 87 | 39900 | 15500 | 2.6 |
| Example 11 | A [50] | BPO [7.4] | $^t$BuOMe [0.8] | 25 | 1d | 79 | 37700 | 15500 | 2.4 |
| Example 12 | A [50] | BPO [7.4] | PhMe [0.8] | 60 | 3h | 81 | 47200 | 19200 | 2.5 |
| Example 13 | A [50] | BPO [7.4] | PhEt [0.8] | 60 | 3h | 86 | 26000 | 11900 | 2.2 |
| Example 14 | A [50] | BPO [7.4] | $CHCl_3$ [0.8] | 60 | 2h | 93 | 37200 | 15300 | 2.4 |
| Example 15 | A [50] | BPO [7.4] | $CHCl_2CH_2Cl$ [0.8] | 60 | 2h | 89 | 36900 | 14100 | 2.6 |
| Example 16 | A [50] | BPO [7.4] | PhC1 [0.8] | 60 | 2h | 83 | 53800 | 20900 | 2.6 |
| Example 17 | A [50] | LPO [9.2] | PhMe [0.8] | 25 | 1d | 83 | 31900 | 13600 | 2.4 |
| Example 18 | A [50] | LPO [9.2] | PhC1 [0.8] | 25 | 1d | 84 | 33600 | 14100 | 2.4 |
| Example 19 | A [100] | BPO [14.8] | $CHCl_3$ [2] | 30 | 1d | 86 | 42200 | 16500 | 2.6 |
| Example 20 | A [100] | BPO [14.8] | PhCl [2] | 30 | 1d | 86 | 50700 | 19700 | 2.6 |
| Example 21 | A [100] | BPO [14.8] | THF [1.6] | 30 | 1d | 79 | 73700 | 27000 | 2.7 |
| Example 22 | A [100] | BPO [14.8] | PhMe [1.6] | 40 | 1d | 90 | 51600 | 19900 | 2.6 |
| Example 23 | A [100] | BPO [14.8] | $CHCl_3$ [1.6] | 40 | 1d | 92 | 50700 | 19600 | 2.6 |
| Example 24 | A [100] | BPO [14.8] | PhMe [1.6] | 40 | 6h | 86 | 39000 | 15900 | 2.5 |
| Comparative Example 1[7] | A [100] | BPO [14.8] | PhMe [1.6] | 40 | 6h | 3 | - | - | - |

[Table 2]

| Example[1] | Vulcanized rubber [mg] | Radical initiator[2] [mg] | Solvent[3] [mL] | Temperature[4] (°C) | Time[5] | Yield[6] (%) | Molecular weight | | |
|---|---|---|---|---|---|---|---|---|---|
| | | | | | | | Mw | Mn | Mw/Mn |
| Example 25 | A [100] | BPO [14.8] | PhMe [2] | 40 | 1d | 85 | 46600 | 18900 | 2.5 |
| Example 26 | A [100] | BPO [14.8] | CHCl$_3$ [1.6] | 30 | 1d | 87 | 33500 | 14200 | 2.4 |
| Example 27 | A [100] | LPO [18.4] | CHCl$_3$ [1.6] | 30 | 1d | 86 | 34100 | 14600 | 2.3 |
| Example 28 | A [100] | APO [5.4] | CHCl$_3$ [1.6] | 30 | 1d | 91 | 50300 | 17900 | 2.8 |
| Example 29 | B [50] | BPO [7.4] | PhCl [0.8] | 25 | 1d | 84 (60:40) | 44400 | 18300 | 2.4 |
| Example 30 | B [100] | BPO [14.8] | CHCl$_3$ [1.6] | 30 | 1d | 86 (59:41) | 48000 | 18800 | 2.6 |
| Example 31 | B [100] | BPO [14.8] | CHCl$_3$ [1.6] | 40 | 1d | 92 (59:41) | 44500 | 17700 | 2.5 |
| Example 32 | C [50] | BPO [7.4] | PhCl [0.8] | 25 | 1d | 74 (41:59) | 46400 | 18500 | 2.5 |
| Example 33 | C [100] | BPO [14.8] | CHCl$_3$ [1.6] | 30 | 1d | 85 (38:62) | 49800 | 19400 | 2.6 |
| Example 34 | C [100] | BPO [14.8] | CHCl$_3$ [1.6] | 40 | 1d | 89 (39:61) | 50400 | 19100 | 2.6 |
| Example 35 | D [100] | BPO [14.8] | CHCl$_3$ [3.2] | 30 | 1d | 77 | 52700 | 20900 | 2.5 |
| Example 36 | D [100] | BPO [14.8] | CDCl$_3$ [3.2] | 30 | 2d | 90 | 45500 | 17900 | 2.5 |
| Example 37 | D [100] | BPO [14.8] | CHCl$_3$ [1.6] | 30 | 3d | 57 | 47400 | 21100 | 2.2 |
| Example 38 | D [100] | BPO [14.8] | PhMe [3.2] | 30 | 4d | 30 | 44000 | 20000 | 2.2 |
| Example 39 | A [500] | BPO [74] | PhMe [8] | 60 | 3h | 84 | 53500 | 22000 | 2.4 |
| Example 40 | A [500] | BPO [74] | PhEt [8] | 60 | 3h | 87 | 47100 | 19600 | 2.4 |
| Example 41 | A [1000] | BPO [147] | PhMe [16] | 25 | 1d | 76 | 49600 | 16600 | 3.0 |
| Example 42 | A [1000] | BPO [147] | PhMe [16] | 25 | 2d | 76 | 43900 | 15200 | 2.9 |
| Example 43 | A [1000] | BPO [147] | CHCl$_3$ [16] | 25 | 1d | 76 | 44000 | 14700 | 3.0 |
| Example 44 | A [1000] | BPO [147] | CHCl$_3$ [16] | 25 | 2d | 76 | 29600 | 11300 | 2.6 |
| Example 45 | A [1000] | LPO [147] | PhMe [16] | 25 | 1d | 77 | 51300 | 17500 | 2.9 |
| Example 46 | A [1000] | LPO [147] | PhMe [16] | 25 | 2d | 81 | 38000 | 13500 | 2.8 |

(continued)

| Example[1] | Vulcanized rubber [mg] | Radical initiator[2] [mg] | Solvent[3] [mL] | Temperature[4] (°C) | Time[5] | Yield[6] (%) | Molecular weight | | |
|---|---|---|---|---|---|---|---|---|---|
| | | | | | | | Mw | Mn | Mw/Mn |
| Example 47 | A [1000] | LPO [147] | CHCl$_3$ [16] | 25 | 1d | 79 | 50900 | 17200 | 3.0 |
| Example 48 | A [1000] | LPO [147] | CHCl$_3$ [16] | 25 | 2d | 82 | 36700 | 13400 | 2.7 |

(Notes for Table 1 and Table 2)

1) The types of reaction vessels used are as follows (all reactions were conducted under sealed conditions).

Examples 1-18, 29, 32: 5 mL Spitz-type vial
Examples 19-28, 30, 31, 33-38, Comparative Example 1: 10 mL round-bottom vial
Examples 39, 40: 20 mL round-bottom vial
Examples 41-48: 150 mL flat-bottom vial

2) The radical initiators used are as follows.

BPO: benzoyl peroxide
LPO: lauroyl peroxide
APO: acetyl peroxide

3) The solvents used are as follows.
PhMe: toluene, Xy: xylene, CyH: cyclohexane, CHCl$_3$: chloroform, CHCl$_2$CH$_2$Cl: 1,1,2-trichloroethane, Cl$_2$C=CCl$_2$: tetrachloroethylene, DCB: o-dichlorobenzene, PhCl: chlorobenzene, PhCN: benzonitrile, PhOMe: anisole, $^t$BuOMe: tert-butyl methyl ether, PhEt: ethylbenzene, THF: tetrahydrofuran, CDCl$_3$: deuterated chloroform
4) For temperature, 25°C indicates decomposition at room temperature, 30°C and 40°C indicate decomposition in a thermostatic oven, and 60°C indicates decomposition in an oil bath or water bath.
5) For time, m indicates minutes, h indicates hours, and d indicates days.
6) The numbers in parentheses for the yield in the decomposition reactions of vulcanized rubbers B and C indicate the ratio of the yield of the isoprene skeleton to the butadiene skeleton.
7) Comparative Example 1 indicates a reaction example conducted under a nitrogen atmosphere using a deoxygenated solvent.

The results of Table 1 and Table 2 indicate that compounded vulcanized rubbers containing natural rubber, butadiene rubber, and/or styrene-butadiene rubber and carbon black are decomposed by a radical initiator such as an acyl peroxide in various solvents under an air atmosphere to yield a soluble polymer. In particular, when using an acyl peroxide, the decomposition reaction proceeds smoothly even at room temperature.

Furthermore, regarding the type of rubber, compared to natural rubber and butadiene rubber, styrene-butadiene rubber exhibits a greater solvent effect, and by using a chlorinated hydrocarbon such as chloroform or chlorobenzene as the solvent, the decomposition reaction proceeds efficiently. For example, in the above vulcanized rubber D containing styrene-butadiene rubber, the yield was 30% under reaction conditions of 30°C for 4 days in toluene solvent (Example 38), but a high yield of 77% was obtained under reaction conditions of 30°C for 1 day in chloroform solvent (Example 35).

In these decomposition reactions, as indicated in the following comparative example, the presence of oxygen is important.

(Comparative Example 1)

In the reaction of Example 29 (vulcanized rubber A, benzoyl peroxide initiator, toluene solvent, 40°C, 6 hours), when a deoxygenated solvent was used and the reaction was conducted under a nitrogen atmosphere, the yield of the soluble polymer decreased from 83% to 3%.

The result of Comparative Example 1 indicates that the decomposition reaction proceeds under an air atmosphere, but hardly proceeds under a nitrogen atmosphere. It is considered that the presence of oxygen in air is extremely important for the progress of the decomposition reaction.

In the decomposition of compounded rubber containing carbon black, the carbon black can be separated by filtration, centrifugation, etc., to obtain a soluble polymer. Specific examples are presented below.

(Example 49)

A mixture of 50 mg of the above vulcanized rubber sample A, 7.4 mg of benzoyl peroxide (hydrated, 75% purity), and 0.8 mL of chlorobenzene was placed in a 20 mL round-bottom vial (sealed), stirred with a magnetic stirrer using a Teflon® rotor under an air atmosphere at 25°C for 1 day, and subjected to a decomposition reaction. As a result of calculating the yield of the soluble polymer produced by the decomposition of the vulcanized rubber by $^1$H NMR measurement of the reaction solution, the yield was calculated to be 94%. Further, by GPC measurement, the molecular weight was estimated to be Mw = 42900, Mn = 17000, Mw/Mn = 2.5.

Chlorobenzene was added to the reaction solution, and the insoluble solid was removed by filtration and washed with toluene. The insoluble solid was vacuum-dried by heating to recover the carbon black component (20 mg). On the other hand, the filtrate and washing solution were combined and concentrated under reduced pressure to obtain a soluble polymer composition (P1) having an isoprene skeleton (30 mg). A portion thereof was taken, and after adding the internal standard substance (hexamethyldisilane), $^1$H NMR measurement was performed, and the proportion of the isoprene skeleton in the soluble polymer composition (P1) was calculated to be 65%. Further, by GPC measurement, the molecular weight was estimated to be Mw = 45200, Mn = 18300, Mw/Mn = 2.5.

(Example 50)

150 mg of the above vulcanized rubber sample A, 23 mg of benzoyl peroxide (hydrated, 75% purity), and 2.4 mL of chlorobenzene were placed in a 100 mL recovery flask (sealed), stirred with a magnetic stirrer using a Teflon® rotor under an air atmosphere at 25°C for 2 days, and subjected to a decomposition reaction. As a result of calculating the yield of the soluble polymer produced by the decomposition of the vulcanized rubber by $^1$H NMR measurement of the reaction solution, the yield was calculated to be 94%. Further, by GPC measurement, the molecular weight was estimated to be Mw = 37800, Mn = 14800, Mw/Mn = 2.6.

Chlorobenzene was added to the reaction solution, and the insoluble solid was removed by filtration and washed with toluene. The insoluble solid was vacuum-dried by heating to recover the carbon black component (40 mg). On the other hand, the filtrate and washing solution were combined and concentrated under reduced pressure to obtain a soluble polymer composition having an isoprene skeleton (100 mg). A portion thereof was taken, and after adding the internal standard substance (hexamethyldisilane), $^1$H NMR measurement was performed, and the proportion of the isoprene skeleton in the soluble polymer composition was calculated to be 62%. Further, by GPC measurement, the molecular weight was estimated to be Mw = 41800, Mn = 15600, Mw/Mn = 2.7.

Furthermore, in order to purify the soluble polymer composition, a portion of the obtained soluble polymer composition was dissolved in tetrahydrofuran and dropped into methanol. The precipitated liquid polymer was separated, washed with methanol, and dried under reduced pressure to obtain a purified soluble polymer composition (P2) (65 mg). A portion thereof was taken, and after adding the internal standard substance (hexamethyldisilane), $^1$H NMR measurement was performed, and the proportion of the isoprene skeleton in the purified soluble polymer composition (P2) was calculated to be 81%. Further, by GPC measurement, the molecular weight was estimated to be Mw = 45800, Mn = 16100, Mw/Mn = 2.5.

(Example 51)

A mixture of 200 mg of the above vulcanized rubber sample A, 30 mg of benzoyl peroxide (hydrated, 75% purity), and 3.2 mL of chloroform was placed in a 20 mL round-bottom vial (sealed), stirred with a magnetic stirrer using a Teflon® rotor under an air atmosphere at 25°C for 2 days, and subjected to a decomposition reaction. As a result of calculating the yield of the soluble polymer produced by the decomposition of the vulcanized rubber by $^1$H NMR measurement of the reaction solution, the yield was calculated to be 89%. Further, by GPC measurement, the molecular weight was estimated to be Mw = 38300, Mn = 15300, Mw/Mn = 2.5.

The reaction solution was concentrated under reduced pressure, diluted with tetrahydrofuran, and the insoluble solid was separated by centrifugation. Tetrahydrofuran was added to the separated insoluble solid, mixed, and further centrifuged to recover the insoluble carbon black component (70 mg). On the other hand, the supernatant after centrifugation was combined and concentrated under reduced pressure to obtain a soluble polymer composition having an isoprene skeleton (147 mg). A portion thereof was taken, and after adding the internal standard substance (hexamethyldisilane), $^1$H NMR measurement was performed, and the proportion of the isoprene skeleton in the soluble polymer composition was calculated to be 69%. Further, by GPC measurement, the molecular weight was estimated to be Mw = 43700, Mn = 16300, Mw/Mn = 2.7.

(Example 52)

A mixture of 200 mg of the above vulcanized rubber sample A, 30 mg of benzoyl peroxide (hydrated, 75% purity), and 3.2 mL of chloroform was placed in a 20 mL round-bottom vial (sealed), stirred with a magnetic stirrer using a Teflon® rotor under an air atmosphere at 60°C for 5 hours, and subjected to a decomposition reaction. As a result of calculating the yield of the soluble polymer produced by the decomposition of the vulcanized rubber by $^1$H NMR measurement of the reaction solution, the yield was calculated to be 87%. Further, by GPC measurement, the molecular weight was estimated to be Mw = 31900, Mn = 13400, Mw/Mn = 2.4.

The reaction solution was concentrated under reduced pressure, diluted with tetrahydrofuran, and the insoluble solid was separated by centrifugation. Tetrahydrofuran was added to the separated insoluble solid, mixed, and further centrifuged to recover the insoluble carbon black component (67 mg). On the other hand, the supernatant after centrifugation was combined and concentrated under reduced pressure to obtain a soluble polymer composition having an isoprene skeleton (148 mg). A portion thereof was taken, and after adding the internal standard substance (hexamethyldisilane), $^1$H NMR measurement was performed, and the proportion of the isoprene skeleton in the soluble polymer composition was calculated to be 68%. Further, by GPC measurement, the molecular weight was estimated to be Mw = 35200, Mn = 14800, Mw/Mn = 2.4.

(Example 53)

A mixture of 200 mg of the above vulcanized rubber sample A, 37 mg of lauroyl peroxide, and 3.2 mL of chloroform was placed in a 20 mL round-bottom vial (sealed), stirred with a magnetic stirrer using a Teflon® rotor under an air atmosphere at 25°C for 2 days, and subjected to a decomposition reaction. As a result of calculating the yield of the soluble polymer produced by the decomposition of the vulcanized rubber by $^1$H NMR measurement of the reaction solution, the yield was calculated to be 80%. Further, by GPC measurement, the molecular weight was estimated to be Mw = 39700, Mn = 16000, Mw/Mn = 2.5.

The reaction solution was concentrated under reduced pressure, diluted with tetrahydrofuran, and the insoluble solid was separated by centrifugation. Tetrahydrofuran was added to the separated insoluble solid, mixed, and further centrifuged. The insoluble solid was vacuum-dried by heating to recover the insoluble carbon black component (74 mg). On the other hand, the supernatant after centrifugation was combined and concentrated under reduced pressure to obtain a soluble polymer composition having an isoprene skeleton (162 mg). A portion thereof was taken, and after adding the internal standard substance (hexamethyldisilane), $^1$H NMR measurement was performed, and the proportion of the isoprene skeleton in the soluble polymer composition was calculated to be 61%. Further, by GPC measurement, the molecular weight was estimated to be Mw = 44400, Mn = 17000, Mw/Mn = 2.6.

(Example 54)

A mixture of 200 mg of the above vulcanized rubber sample A, 37 mg of lauroyl peroxide, and 3.2 mL of chloroform was placed in a 20 mL round-bottom vial (sealed), and, under an air atmosphere, stirred at 60°C for 5 hours using a magnetic stirrer with a Teflon® rotor to carry out the decomposition reaction. As a result of calculating the yield of the soluble polymer produced by the decomposition of the vulcanized rubber based on $^1$H NMR measurement of the reaction solution, the yield was calculated to be 87%. Further, by GPC measurement, the molecular weight was estimated to be Mw = 31,900, Mn = 13,400, and Mw/Mn = 2.4.

The reaction solution was concentrated under reduced pressure, diluted with tetrahydrofuran, and the insoluble solid was separated by centrifugation. Toluene was added to the separated insoluble solid, mixed, and further subjected to centrifugation. The insoluble solid was vacuum-dried by heating to recover the insoluble carbon black component (76 mg). On the other hand, the supernatant after centrifugation was combined and concentrated under reduced pressure, resulting in a soluble polymer composition having an isoprene skeleton (159 mg). A portion thereof was taken, and $^1$H NMR measurement was performed after adding an internal standard substance (hexamethyldisilane). As a result, the proportion of the isoprene skeleton in the soluble polymer composition was calculated to be 61%. Further, by GPC measurement, the molecular weight was estimated to be Mw = 27,600, Mn = 12,900, and Mw/Mn = 2.1.

(Example 55)

A mixture of 1,000 mg of the above vulcanized rubber sample A, 147 mg of benzoyl peroxide (hydrated, 75% purity), and 16 mL of toluene was placed in a 150 mL flat-bottom vial (sealed), and, under an air atmosphere, stirred at 25°C for 5 days using a magnetic stirrer with a Teflon® rotor to carry out the decomposition reaction. As a result of calculating the yield of the soluble polymer produced by the decomposition of the vulcanized rubber based on $^1$H NMR measurement of the reaction solution, the yield was calculated to be 80%. Further, by GPC measurement, the molecular weight was estimated to be Mw = 42,400, Mn = 14,900, and Mw/Mn = 2.8.

The reaction solution was diluted with toluene, and the insoluble solid was separated by centrifugation. Toluene was added to the separated insoluble solid, mixed, and further subjected to centrifugation. The insoluble solid was vacuum-dried by heating to recover the insoluble carbon black component (368 mg). On the other hand, the supernatant after centrifugation was combined and concentrated under reduced pressure, resulting in a soluble polymer composition having an isoprene skeleton (731 mg). A portion thereof was taken, and $^1$H NMR measurement was performed after adding an internal standard substance (hexamethyldisilane). As a result, the proportion of the isoprene skeleton in the soluble polymer composition was calculated to be 64%. Further, by GPC measurement, the molecular weight was estimated to be Mw = 47,000, Mn = 15,600, and Mw/Mn = 3.0.

(Example 56)

A mixture of 1,000 mg of the above vulcanized rubber sample A, 147 mg of benzoyl peroxide (hydrated, 75% purity), and 16 mL of chloroform was placed in a 150 mL flat-bottom vial (sealed), and, under an air atmosphere, stirred at 25°C for 5 days using a magnetic stirrer with a Teflon® rotor to carry out the decomposition reaction. As a result of calculating the yield of the soluble polymer produced by the decomposition of the vulcanized rubber based on $^1$H NMR measurement of the reaction solution, the yield was calculated to be 85%. Further, by GPC measurement, the molecular weight was estimated to be Mw = 25,400, Mn = 10,300, and Mw/Mn = 2.5.

The reaction solution was diluted with toluene, and the insoluble solid was separated by centrifugation. Toluene was added to the separated insoluble solid, mixed, and further subjected to centrifugation. The insoluble solid was vacuum-dried by heating to recover the insoluble carbon black component (351 mg). On the other hand, the supernatant after centrifugation was combined and concentrated under reduced pressure, resulting in a soluble polymer composition having an isoprene skeleton (731 mg). A portion thereof was taken, and $^1$H NMR measurement was performed after adding an internal standard substance (hexamethyldisilane). As a result, the proportion of the isoprene skeleton in the soluble polymer composition was calculated to be 61%. Further, by GPC measurement, the molecular weight was estimated to be Mw = 28,900, Mn = 10,700, and Mw/Mn = 2.7.

(Example 57)

A mixture of 1,000 mg of the above vulcanized rubber sample A, 183 mg of lauroyl peroxide, and 16 mL of toluene was placed in a 150 mL flat-bottom vial (sealed), and, under an air atmosphere, stirred at 25°C for 5 days using a magnetic stirrer with a Teflon® rotor to carry out the decomposition reaction. As a result of calculating the yield of the soluble polymer produced by the decomposition of the vulcanized rubber based on $^1$H NMR measurement of the reaction solution, the yield was calculated to be 85%. Further, by GPC measurement, the molecular weight was estimated to be Mw = 27,100, Mn = 10,900, and Mw/Mn = 2.5.

The reaction solution was diluted with toluene, and the insoluble solid was separated by centrifugation. Toluene was added to the separated insoluble solid, mixed, and further subjected to centrifugation. The insoluble solid was vacuum-dried by heating to recover the insoluble carbon black component (392 mg). On the other hand, the supernatant after centrifugation was combined and concentrated under reduced pressure, resulting in a soluble polymer composition having an isoprene skeleton (782 mg). A portion thereof was taken, and $^1$H NMR measurement was performed after adding an internal standard substance (hexamethyldisilane). As a result, the proportion of the isoprene skeleton in the soluble polymer composition was calculated to be 58%. Further, by GPC measurement, the molecular weight was estimated to be Mw = 30,100, Mn = 11,100, and Mw/Mn = 2.7.

(Example 58)

A mixture of 1,000 mg of the above vulcanized rubber sample A, 183 mg of lauroyl peroxide, and 16 mL of chloroform was placed in a 150 mL flat-bottom vial (sealed), and, under an air atmosphere, stirred at 25°C for 5 days using a magnetic stirrer with a Teflon® rotor to carry out the decomposition reaction. As a result of calculating the yield of the soluble polymer produced by the decomposition of the vulcanized rubber based on $^1$H NMR measurement of the reaction solution, the yield was calculated to be 85%. Further, by GPC measurement, the molecular weight was estimated to be Mw = 23,200, Mn = 9,800, and Mw/Mn = 2.4.

The reaction solution was diluted with toluene, and the insoluble solid was separated by centrifugation. Toluene was added to the separated insoluble solid, mixed, and further subjected to centrifugation. The insoluble solid was vacuum-dried by heating to recover the insoluble carbon black component (381 mg). Further, the supernatant after centrifugation was combined and concentrated under reduced pressure, resulting in a soluble polymer composition having an isoprene skeleton (798 mg). A portion thereof was taken, and $^1$H NMR measurement was performed after adding an internal standard substance (hexamethyldisilane). As a result, the proportion of the isoprene skeleton in the soluble polymer composition was calculated to be 60%. Further, by GPC measurement, the molecular weight was estimated to be Mw = 27,200, Mn = 10,500, and Mw/Mn = 2.6.

(Example 59)

A mixture of 6,000 mg of the above vulcanized rubber sample A, 886 mg of benzoyl peroxide (hydrated, 75% purity), and 100 mL of toluene was placed in a 1,000 mL flat-bottom vial (unsealed) equipped with a PTFE membrane of 0.2 $\mu$m pore size, and, under an air atmosphere, stirred at 25°C for 4 days using a magnetic stirrer with a Teflon® rotor to carry out the decomposition reaction. As a result of $^1$H NMR measurement of the reaction solution, the yield of the soluble polymer produced by the decomposition of the vulcanized rubber was calculated to be 80%. Further, by GPC measurement, the molecular weight was estimated to be Mw = 45,800, Mn = 14,800, and Mw/Mn = 3.1.

The reaction solution was diluted with tetrahydrofuran, and the insoluble solid was separated by centrifugation and vacuum-dried by heating to recover the insoluble carbon black component (2,257 mg). On the other hand, the supernatant was concentrated under reduced pressure, resulting in a soluble polymer composition having an isoprene skeleton (4,460 mg). After adding an internal standard substance (hexamethyldisilane), $^1$H NMR measurement was performed, and as a result, the proportion of the isoprene skeleton in the soluble polymer composition was calculated to be 66%. Further, by GPC measurement, the molecular weight was estimated to be Mw = 51,100, Mn = 16,700, and Mw/Mn = 3.1.

(Example 60)

A mixture of 6,000 mg of the above vulcanized rubber sample A, 886 mg of benzoyl peroxide (hydrated, 75% purity), and 110 mL of toluene was placed in a 1,000 mL flat-bottom vial (unsealed) equipped with a PTFE membrane of 0.45 $\mu$m pore size, and, under an air atmosphere, stirred at 25°C for 4 days using a magnetic stirrer with a Teflon® rotor to carry out the decomposition reaction. As a result of $^1$H NMR measurement of the reaction solution, the yield of the soluble polymer composition produced by the decomposition of the vulcanized rubber was calculated to be 80%. Further, by GPC measurement, the molecular weight was estimated to be Mw = 50,400, Mn = 15,900, and Mw/Mn = 3.2.

The reaction solution was diluted with toluene, and the insoluble solid was separated by centrifugation and vacuum-dried by heating to recover the insoluble carbon black component (2,304 mg). On the other hand, the supernatant was concentrated under reduced pressure, resulting in a soluble polymer composition having an isoprene skeleton (4,351 mg). After adding an internal standard substance (hexamethyldisilane), $^1$H NMR measurement was performed, and as a result, the proportion of the isoprene skeleton in the soluble polymer composition was calculated to be 66%. Further, by GPC measurement, the molecular weight was estimated to be Mw = 51,400, Mn = 16,200, and Mw/Mn = 3.2.

The soluble polymer obtained by the decomposition step of the present disclosure basically retains the polymer skeleton in the raw material vulcanized rubber. For example, in the decomposition of vulcanized rubber sample A, cis-type polyisoprene can be selectively obtained.

For example, the NMR data of the purified soluble polymer composition (P2) obtained in the decomposition reaction of vulcanized rubber sample A in Example 50 were as follows.

$^1$H NMR (CDCl$_3$): $\delta$ (ppm) 1.68 (s, 3H, CH$_3$), 2.00-2.09 (m, 4H, CH$_2$), 5.12 (t, J = 6.2 Hz, 1H, =CH)
$^{13}$C NMR (CDCl$_3$): $\delta$ (ppm) 23.5, 26.4, 32.2, 125.0, 135.2

The observed $^1$H and $^{13}$C NMR data indicate that the obtained soluble polymer has a cis-type polyisoprene skeleton and retains the basic skeleton of the polymer component in the vulcanized rubber.

(Example 61)

A mixture of 100 mg of vulcanized rubber sample A, 14.8 mg of benzoyl peroxide, and 1.6 mL of toluene was placed in a 10 mL vial (sealed), and, under an air atmosphere, stirred at 60°C for 1 hour using a magnetic stirrer with a Teflon® rotor to carry out the decomposition reaction. As a result of calculating the yield of the soluble polymer produced by the decomposition of the vulcanized rubber based on $^1$H NMR measurement of the reaction solution, the yield was calculated to be 68%. Further, by GPC measurement, the molecular weight was estimated to be Mw = 57,900, Mn = 15,100, and Mw/Mn = 3.8.

(Example 62)

In Example 61, except that the decomposition reaction time was set to 2 hours instead of 1 hour, the decomposition reaction was carried out in the same manner as in Example 61, and the product was analyzed. As a result, the yield of the soluble polymer was calculated to be 87%, and the molecular weight of the soluble polymer was estimated to be Mw = 64,600, Mn = 21,200, and Mw/Mn = 3.0.

(Example 63)

In Example 61, except that 18.4 mg of lauroyl peroxide was used instead of 14.8 mg of benzoyl peroxide, the decomposition reaction was carried out in the same manner as in Example 61, and the product was analyzed. As a result, the yield of the soluble polymer was calculated to be 85%, and the molecular weight of the soluble polymer was estimated to be Mw = 59,800, Mn = 21,600, and Mw/Mn = 2.8.
Comparing the yield of the soluble polymer with that in Example 61, when benzoyl peroxide was used, the yield was 68%, but when lauroyl peroxide was used, the yield was 85%, indicating that the decomposition reaction proceeds faster when lauroyl peroxide is used.

(Example 64)

In Example 63, except that the decomposition reaction time was set to 2 hours instead of 1 hour, the decomposition reaction was carried out in the same manner as in Example 63, and the product was analyzed. As a result, the yield of the soluble polymer was calculated to be 88%, and the molecular weight of the soluble polymer was estimated to be Mw = 37,100, Mn = 14,800, and Mw/Mn = 2.6.
Comparing the molecular weight of the soluble polymer with that in Example 62, when benzoyl peroxide was used, Mw = 64,600, Mn = 21,200, and Mw/Mn = 3.0, but when lauroyl peroxide was used, Mw = 37,100, Mn = 14,800, and Mw/Mn = 2.6, indicating that the decomposition reaction proceeds faster and a lower molecular weight soluble polymer is obtained when lauroyl peroxide is used.

(Example 65)

In Example 61, except that ethylbenzene solvent was used instead of toluene solvent, the decomposition reaction was carried out in the same manner as in Example 61, and the product was analyzed. As a result, the yield of the soluble polymer was calculated to be 87%, and the molecular weight of the soluble polymer was estimated to be Mw = 35,800, Mn = 14,000, and Mw/Mn = 3.0.
Comparing the yield of the soluble polymer with that in Example 61, when toluene solvent was used, the yield was 68%, but when ethylbenzene solvent was used, the yield was 87%, indicating that the decomposition reaction proceeds faster when ethylbenzene solvent is used.

(Example 66)

In Example 65, except that the decomposition reaction time was set to 2 hours instead of 1 hour, the decomposition reaction was carried out in the same manner as in Example 65, and the product was analyzed. As a result, the yield of the soluble polymer was calculated to be 88%, and the molecular weight of the soluble polymer was estimated to be Mw = 35,300, Mn = 13,900, and Mw/Mn = 2.5.
Comparing the molecular weight of the soluble polymer with that in Example 62, when toluene solvent was used, Mw = 64,600, Mn = 21,200, and Mw/Mn = 3.0, but when ethylbenzene solvent was used, Mw = 35,300, Mn = 13,900, and Mw/Mn = 2.5, indicating that the decomposition reaction proceeds faster and a lower molecular weight soluble polymer is obtained when ethylbenzene solvent is used.

(Example 67)

In Example 65, except that 18.4 mg of lauroyl peroxide was used instead of 14.8 mg of benzoyl peroxide, the decomposition reaction was carried out in the same manner as in Example 65, and the product was analyzed. As a result, the yield of the soluble polymer was calculated to be 88%, and the molecular weight of the soluble polymer was estimated to be Mw = 43,300, Mn = 17,000, and Mw/Mn = 2.5.

(Example 68)

In Example 67, except that the decomposition reaction time was set to 2 hours instead of 1 hour, the decomposition reaction was carried out in the same manner as in Example 67, and the product was analyzed. As a result, the yield of the soluble polymer was calculated to be 88%, and the molecular weight of the soluble polymer was estimated to be Mw = 27,600, Mn = 11,700, and Mw/Mn = 2.4.

(Example 69)

As a pretreatment step, 10 g of the above vulcanized rubber sample A was immersed in 100 mL of toluene solvent, shaken and stirred at room temperature for 1 day to elute additives in the vulcanized rubber, and then the vulcanized rubber was taken out from the solution and dried under reduced pressure. A mixture of 200 mg of vulcanized rubber sample A after the pretreatment step, 7.3 mg of lauroyl peroxide, and 3.2 mL of chloroform was placed in a 30 mL vial (sealed), and, under an air atmosphere, stirred at room temperature for 1 day using a magnetic stirrer with a Teflon® rotor to carry out the decomposition reaction. As a result of calculating the yield of the soluble polymer produced by the decomposition of the vulcanized rubber based on $^1$H NMR measurement of the reaction solution, the yield was calculated to be 84%. Further, by GPC measurement, the molecular weight was estimated to be Mw = 70,200, Mn = 20,700, and Mw/Mn = 3.4.

When the pretreatment step was not performed, under similar decomposition reaction conditions, the yield of the soluble polymer was 11%, and it was found that the decomposition reaction is promoted by the pretreatment step.

(Example 70)

In Example 69, except that the decomposition reaction time was set to 2 days instead of 1 day, the pretreatment and decomposition reaction were carried out in the same manner as in Example 69, and the product was analyzed. As a result, the yield of the soluble polymer was calculated to be 86%, and the molecular weight of the soluble polymer was estimated to be Mw = 57,100, Mn = 17,700, and Mw/Mn = 3.2.

When the pretreatment step was not performed, under similar decomposition reaction conditions, the yield of the soluble polymer was 13%, and it was found that the decomposition reaction is promoted by the pretreatment step.

(Example 71)

In the pretreatment step of Example 69, except that 40 mL of acetone solvent was used instead of 100 mL of toluene solvent, the pretreatment and decomposition reaction were carried out in the same manner as in Example 69, and the product was analyzed. As a result, the yield of the soluble polymer was calculated to be 83%, and the molecular weight of the soluble polymer was estimated to be Mw = 67,800, Mn = 21,100, and Mw/Mn = 3.2.

(Example 72)

In Example 71, except that the decomposition reaction time was set to 2 days instead of 1 day, the pretreatment and decomposition reaction were carried out in the same manner as in Example 71, and the product was analyzed. As a result, the yield of the soluble polymer was calculated to be 84%, and the molecular weight of the soluble polymer was estimated to be Mw = 62,500, Mn = 18,600, and Mw/Mn = 3.4.

INDUSTRIAL APPLICABILITY

According to the present disclosure, since it is possible to provide an efficient decomposition method for vulcanized rubber related to chemical recycling of vulcanized rubber and the like, the utility value of the present disclosure is high, and its industrial significance is considerable.

**Claims**

1. A decomposition method for vulcanized rubber comprising causing a radical initiator selected from peroxides to act on vulcanized rubber or a composition containing the vulcanized rubber at 0°C to 60°C in a solvent, under an atmosphere containing oxygen gas, to thereby cause conversion into a soluble decomposition product.

2. The decomposition method according to claim 1, wherein a rubber component of the vulcanized rubber is a rubber component including at least one selected from natural rubber (NR), synthetic isoprene rubber (IR), butadiene rubber (BR), and styrene-butadiene rubber (SBR).

3. The decomposition method according to claim 1, wherein the composition containing the vulcanized rubber is a composition selected from tire rubbers containing carbon black or silica.

4. The decomposition method according to claim 1, wherein the peroxide is a peroxide selected from acyl peroxides.

5. The decomposition method according to claim 4, wherein the acyl peroxide is an acyl peroxide selected from benzoyl peroxide, lauroyl peroxide, and acetyl peroxide.

6. The decomposition method according to claim 1, wherein the decomposition method uses a chlorinated hydrocarbon or an aromatic hydrocarbon as the solvent.

7. The decomposition method according to claim 6, wherein the chlorinated hydrocarbon is a chlorinated hydrocarbon selected from chloroform and chlorobenzene.

8. The decomposition method according to claim 6, wherein the aromatic hydrocarbon is ethylbenzene.

9. The decomposition method according to claim 1, wherein the vulcanized rubber is vulcanized rubber that has undergone a pretreatment step of washing with a solvent.

## INTERNATIONAL SEARCH REPORT

| International application No. |
| --- |
| **PCT/JP2024/026168** |

### A. CLASSIFICATION OF SUBJECT MATTER

*C08C 19/08*(2006.01)i; *C08J 11/10*(2006.01)i
FI: C08C19/08; C08J11/10

According to International Patent Classification (IPC) or to both national classification and IPC

### B. FIELDS SEARCHED

Minimum documentation searched (classification system followed by classification symbols)

C08C19/08; C08J11/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 56-041202 A (BRIDGESTONE TIRE CO., LTD.) 17 April 1981 (1981-04-17) claims, page 2, upper right column, lines 1-5, page 2, lower left column, line 8 - page 3, upper left column, line 18, page 3, lower left column, line 9 - lower right column, line 2, examples | 1-7, 9 |
| Y | | 8 |
| X | JP 2000-119438 A (THE YOKOHAMA RUBBER CO., LTD.) 25 April 2000 (2000-04-25) claims, paragraphs [0008], [0017]-[0024], [0032], [0039], [0051], examples | 1-6, 9 |
| Y | | 8 |
| X | JP 2005-232347 A (SUMITOMO RUBBER INDUSTRIES, LTD.) 02 September 2005 (2005-09-02) claims, paragraphs [0010], [0019]-[0028], examples | 1-3 |
| X | JP 2009-256645 A (INSTITUTE OF NATIONAL COLLEGES OF TECHNOLOGY JAPAN) 05 November 2009 (2009-11-05) claims, paragraphs [0004], [0034]-[0035], [0038]-[0043], examples | 1-2, 9 |

| ✓ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **09 August 2024** | **20 August 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

# EP 4 755 925 A1

## INTERNATIONAL SEARCH REPORT

International application No.

**PCT/JP2024/026168**

### C. DOCUMENTS CONSIDERED TO BE RELEVANT

| Category* | Citation of document, with indication, where appropriate, of the relevant passages | Relevant to claim No. |
|---|---|---|
| X | JP 9-136903 A (KAO CORPORATION) 27 May 1997 (1997-05-27)<br>claims, paragraphs [0011], [0016]-[0026], examples | 1-2, 4-5, 9 |
| Y | JP 60-040193 A (FRIED KRUPP GMBH) 02 March 1985 (1985-03-02)<br>claims, page 3, upper left column, lines 13-15, examples | 8 |
| Y | JP 2004-315766 A (THE YOKOHAMA RUBBER CO., LTD.) 11 November 2004 (2004-11-11)<br>claims, paragraph [0019], examples | 8 |
| A | JP 2011-153272 A (BRIDGESTONE CORPORATION) 11 August 2011 (2011-08-11)<br>entire text | 1-9 |

Form PCT/ISA/210 (second sheet) (July 2022)

21

## INTERNATIONAL SEARCH REPORT
### Information on patent family members

International application No.

**PCT/JP2024/026168**

| Patent document cited in search report | | | Publication date (day/month/year) | Patent family member(s) | Publication date (day/month/year) |
|---|---|---|---|---|---|
| JP | 56-041202 | A | 17 April 1981 | US 4305850 A<br>claims, column 1, lines 38-42, column 2, lines 7-63, column 3, lines 26-45, examples | |
| JP | 2000-119438 | A | 25 April 2000 | US 6525105 B1<br>claims, column 4, line 51 - column 5, line 38, column 11, line 13 - column 13, line 35, column 21, lines 10-25, column 25, lines 6-13 , examples<br>WO 2000/069953 A1<br>EP 1113041 A1 | |
| JP | 2005-232347 | A | 02 September 2005 | (Family: none) | |
| JP | 2009-256645 | A | 05 November 2009 | (Family: none) | |
| JP | 9-136903 | A | 27 May 1997 | US 5856600 A<br>claims, column 2, line 53 - column 3, line 5, column 4, line 25 - column 5, line 58, examples<br>EP 773230 A1<br>KR 10-0473902 B1 | |
| JP | 60-040193 | A | 02 March 1985 | US 4642401 A<br>claims, column 3, lines 51-53, examples<br>EP 132612 A1 | |
| JP | 2004-315766 | A | 11 November 2004 | (Family: none) | |
| JP | 2011-153272 | A | 11 August 2011 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11209511 A
- JP S54117594 A
- JP H11514020 A
- JP 2004313031 A
- JP 2002097386 A

**Non-patent literature cited in the description**

- *J. Polym. Environ*, 2011, vol. 19, 382-390
- *Polym. Degrad. Stab.*, 2015, vol. 118, 88-95